# FASCICULE DE BREVET EUROPEEN

(11) **EP 2 458 607 B1**
(45) Date de publication et mention de la délivrance du brevet: **24.07.2013**
(21) Numéro de dépôt: 11354048.8
(22) Date de dépôt: 23.09.2011
(51) Int. Cl.: H01H 9/26, H02B 11/12

(54) **Dispositif d'interverrouillage destiné à sécuriser l'accès à la boîte à câbles d'une cellule électrique et cellule électrique comportant un tel dispositif**
Verriegelungsvorrichtung zur Sicherung des Zugangs zur Kabeldose einer Stromzelle, und Stromzelle, die eine solche Vorrichtung enthält
Interlocking device intended for securing access to the cable box of an electric cell and electric cell comprising such a device

(30) Priorité: 30.11.2010 FR 1004646
(43) Date de publication de la demande: 30.05.2012
(73) Titulaire: Schneider Electric Industries SAS, 92500 Rueil-Malmaison (FR)
(72) Inventeur: Maquet, Patrick, 38050 Grenoble Cedex 09 (FR)
(74) Mandataire: Colette, Marie-Françoise

(56) Documents cités:
- EP-A1- 1 026 712
- WO-A1-97/23935
- GB-A- 921 217
- GB-A- 1 328 984

## Description

La présente invention concerne un dispositif d'inter verrouillage destiné à sécuriser l'accès à la boîte à câbles d'une cellule électrique, ladite cellule comprenant au moins un appareil de coupure électrique en série avec des moyens de mise à la terre des câbles, ladite cellule étant reliée en amont à un réseau d'alimentation électrique et en aval à au moins un câbles, le ou les câbles étant logé(s) dans une boîte à câbles comportant une paroi de fond, une paroi inférieure, une paroi supérieure séparant la boîte à câbles du compartiment logeant l'appareil de coupure et les moyens de mise à la terre, deux parois latérales et une porte, ledit dispositif comportant des moyens pour autoriser l'ouverture de la porte précitée uniquement si la mise à la terre des câbles est réalisée, des moyens pour interdire la fermeture de l'appareil de coupure tant que la porte n'est pas présente et verrouillée, et des moyens pour autoriser la remise en ligne des moyens de mise à la terre lorsque la porte est ouverte mais interdire la fermeture de l'appareil de coupure lorsque ladite porte est ouverte, ladite cellule comportant un sélecteur relié mécaniquement à l'appareil de coupure et au dispositif de mise à la terre, ledit sélecteur étant actionnable par un opérateur et mobile entre deux positions respectivement une position autorisant la manoeuvre de l'arbre d'ouverture et de fermeture de l'appareil de coupure et une position n'autorisant pas cette manoeuvre.

On connaît deux types de dispositifs d'inter verrouillage destinés à sécuriser l'accès à la boîte à câbles d'une cellule électrique moyenne tension, ces dispositifs pouvant être rangés dans ces deux catégories suivant la localisation de leurs systèmes de verrouillage, celui-ci pouvant se situer soit à l'intérieur de la boîte à câbles soit à l'extérieur.

Dans le cas où le système d'inter verrouillage est situé à l'extérieur de la boîte à câbles, le principe consiste à verrouiller mécaniquement la porte par l'extérieur. Ce dispositif est souvent réalisé au moyen d'une butée rapportée sur la porte et destinée à venir se loger dans un verrou fixé sur la cellule. Le verrou est ensuite piloté directement ou indirectement par le dispositif de mise à la terre par l'intermédiaire d'un système de bielles.

Le principal inconvénient de ces systèmes tient en ce qu'ils sont accessibles de l'extérieur et sont donc susceptibles d'être fraudés ou vandalisés.

Ces systèmes nécessitent donc d'être surdimensionnés de manière à résister à l'environnement extérieur. De plus, ils sont en saillie par rapport à la cellule, sont difficilement intégrables à celle-ci et sont généralement peu esthétiques.

Dans le cas d'un système interne à la boîte à câbles, le principe consiste à verrouiller mécaniquement la porte par l'intérieur au moyen de butées amovibles situées à l'intérieur de la boîte à câbles, lesdites butées étant pilotées directement ou indirectement par le dispositif de mise à la terre via un système de bielles traversantes.

Le principal inconvénient de ces dispositifs est qu'ils pénètrent dans la boîte à câbles et génèrent donc des contraintes diélectriques.

Un tel dispositif d'inter-verouillage est connu du document GB 1 328 984 A.

La présente invention résout ces problèmes et propose un dispositif d'inter verrouillage à la fois suffisamment compact pour ne pas générer de contraintes diélectriques et suffisamment robuste pour remplir la fonction d'inter verrouillage, ainsi qu'une cellule électrique moyenne tension le comportant.

A cet effet, la présente invention a pour objet un dispositif d'inter verrouillage du genre précédemment mentionné, ledit dispositif étant caractérisé en ce qu'il comporte un boîtier logeant un verrou et un levier de renvoi, ledit boîtier étant destiné à être fixé sur la face intérieure d'une paroi de la boîte à câbles, ledit verrou coopérant d'une part avec la porte et d'autre part, avec une tringle de verrouillage de la porte commandée par l'arbre du dispositif de mise à la terre, de manière que la commande de la mise à la terre des câbles entraîne le déverrouillage de la porte, ledit levier de renvoi coopérant d'une part avec la porte et d'autre part, avec une tringle de verrouillage du sélecteur, de manière à empêcher le déplacement du sélecteur vers une position autorisant l'ouverture ou la fermeture de l'appareil de coupure, lorsque la porte n'est pas en position fermée.

Selon une caractéristique particulière, le verrou comporte une pièce allongée montée coulissante à travers respectivement deux parties pliées en équerre du boîtier, ladite pièce allongée comportant une première partie autour de laquelle est monté un ressort, et une seconde partie coopérant avec la tringle de verrouillage de la porte, ledit ressort étant interposé entre l'une des parties pliées en équerre et la seconde partie précitée de la pièce allongée, le ressort rappelant le verrou dans une position escamotée.

Selon une autre caractéristique, cette seconde partie comporte une ouverture destinée à coopérer avec une partie en biais formée à l'extrémité de la bielle dite seconde de la tringle de verrouillage de la porte, cette tringle se déplaçant à travers l'ouverture précitée à l'encontre de la force de rappel du ressort suivant une direction sensiblement perpendiculaire à la direction de déplacement du verrou, le ressort rappelant le verrou dans une position escamotée lorsque la tringle s'éloigne de l'ouverture.

Selon une autre caractéristique, ce levier de renvoi est monté articulé par rapport au boîtier et comporte une première extrémité destinée à coopérer avec un doigt prévu sur la porte et une seconde extrémité coopérant avec la tringle de verrouillage du sélecteur.

Selon une autre caractéristique, les deux tringles précitées traversent l'ouverture précitée.

Selon une autre caractéristique, ce dispositif comporte des moyens de fixation de la porte sur la boîte à câbles, lesdits moyens comportant des moyens d'accrochage solidaires de la boîte à câbles ou de la porte, lesdits moyens d'accrochage coopérant avec au moins une lumière appartenant à la porte respectivement, la boîte à câbles, de manière à permettre le coulissement de la porte par rapport à la boîte à câbles, d'une position dans laquelle ladite porte se trouve en regard en partie de l'appareil de coupure et de la boîte à câbles à une position dans laquelle ladite porte se trouve totalement en regard de la boîte à câbles, position permettant le verrouillage de ladite porte, la fixation de la porte étant réalisée en plaquant tout d'abord la porte contre la boîte à câbles et en la faisant descendre jusqu'à ce qu'elle coopère avec les moyens d'accrochage précités, position dans laquelle ladite porte peut être verrouillée.

Selon une autre caractéristique, la tringle de verrouillage de la porte précitée comporte une première bielle comportant une première extrémité solidaire en rotation de l'arbre de mise à la terre et une seconde extrémité reliée de manière articulée à l'une des extrémités d'une bielle plate dite seconde torsadée à 90° dont l'autre extrémité coopère avec un verrou, ladite bielle étant torsadée de manière que cette bielle comporte deux parties s'étendant suivant deux plans formant entre eux un angle de sensiblement 90°, le premier plan s'étendant sensiblement perpendiculairement à l'arbre d'ouverture/fermeture de l'appareil de coupure, à l'arbre de mise à la terre et sensiblement parallèlement à la paroi de fond de la boîte à câbles et le second plan s'étendant sensiblement parallèlement à la profondeur de la boîte à câble et donc à ses parois latérales.

Selon une autre caractéristique, la tringle de verrouillage du sélecteur comporte une bielle dite troisième articulée par rapport à un support dit premier de l'appareil de coupure et comportant une première extrémité coopérant avec le sélecteur, et une seconde extrémité montée articulée par rapport à l'une des extrémités d'une bielle dite quatrième torsadée à 90°, de manière que cette bielle comporte deux parties s'étendant suivant deux plans formant entre eux un angle de sensiblement 90°, le premier plan s'étendant sensiblement perpendiculairement à l'arbre d'ouverture/fermeture de l'appareil de coupure, à l'arbre de mise à la terre et sensiblement parallèlement à la paroi de fond de la boîte à câble et le second plan s'étendant sensiblement parallèlement à la profondeur de la boîte à câble et donc à ses parois latérales.

Selon une autre caractéristique, la première extrémité de la bielle dite troisième, comporte une encoche coopérant avec une tige appartenant au sélecteur et s'étendant sensiblement parallèlement à l'arbre d'ouverture et de fermeture et à l'arbre de mise à la terre.

Selon une autre caractéristique, en position dite « porte absente », la tringle de verrouillage du sélecteur est amenée par gravité terrestre dans une position de verrouillage du sélecteur dans laquelle elle coopère avec la tige précitée.

Selon une autre caractéristique, la bielle dite troisième est montée articulée sur un support dit second, ledit second support étant riveté sur le support dit premier précité de l'appareil de coupure.

Selon une autre caractéristique, la première bielle de la tringle de verrouillage de la porte est fixée sur l'arbre de mise à la terre par clipsage.

Selon une autre caractéristique, toutes les pièces du dispositif de verrouillage à savoir le boîtier, le verrou, le levier de renvoi, le doigt de présence de la porte, la tringle de verrouillage de la porte et la tringle de verrouillage du sélecteur sont réalisées à partir de simples pièces de tôlerie.

La présente invention a encore pour objet une cellule électrique moyenne tension comportant un dispositif d'inter verrouillage comportant les caractéristiques précédemment mentionnées prises seules ou en combinaison.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une représentation schématique, illustrant une cellule électrique moyenne tension selon l'invention,
- Les figures 2 à 8 sont des vues partielles en perspective, illustrant un dispositif d'inter verrouillage selon l'invention, mis en service dans une cellule moyenne tension respectivement dans différentes positions de ce dispositif,

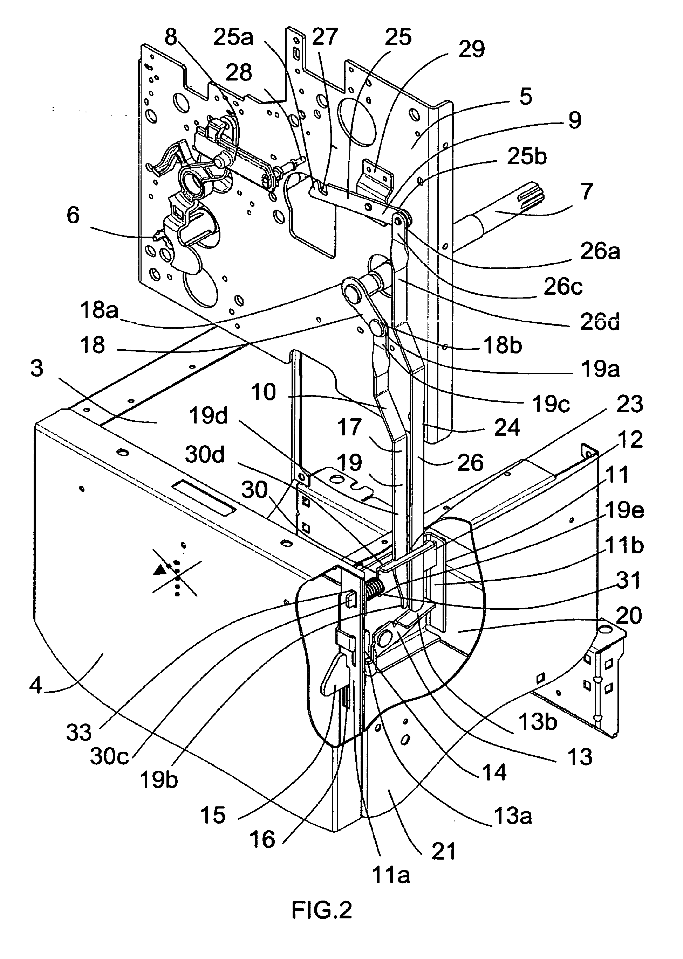

- La figure 2 représente le dispositif précité, l'interrupteur de la cellule étant fermé, le dispositif de mise à la terre étant en ligne et la porte étant fermée et verrouillée,

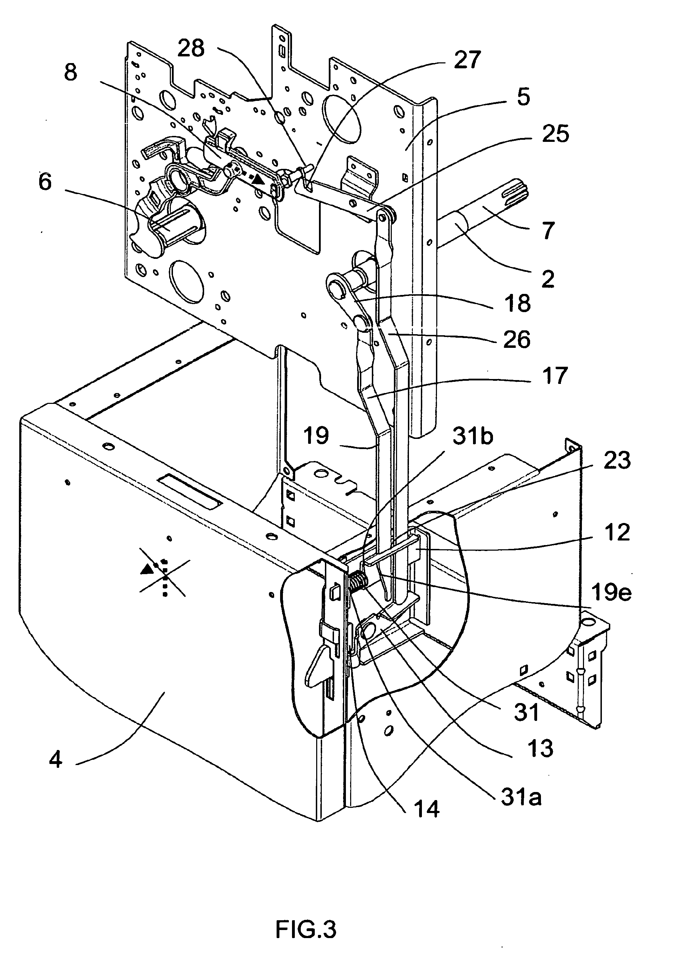

- La figure 3 représente le dispositif précité, l'interrupteur de la cellule étant ouvert, le dispositif de mise à la terre étant en ligne et la porte étant fermée et verrouillée,

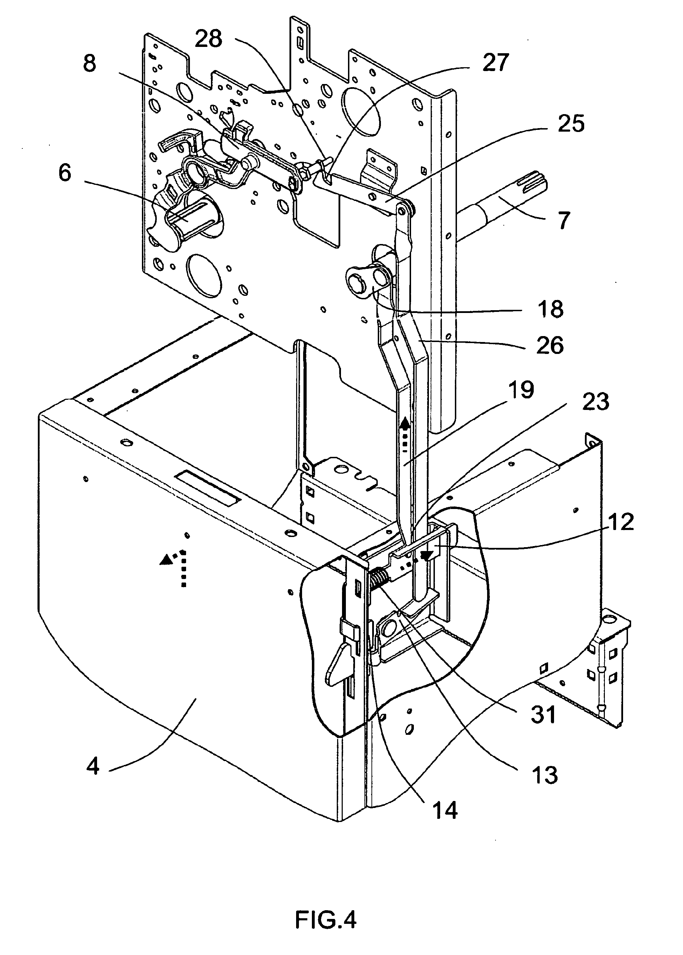

- La figure 4 représente le dispositif précité, l'interrupteur de la cellule étant ouvert, le dispositif de mise à la terre étant à la terre et la porte étant fermée et déverrouillée,

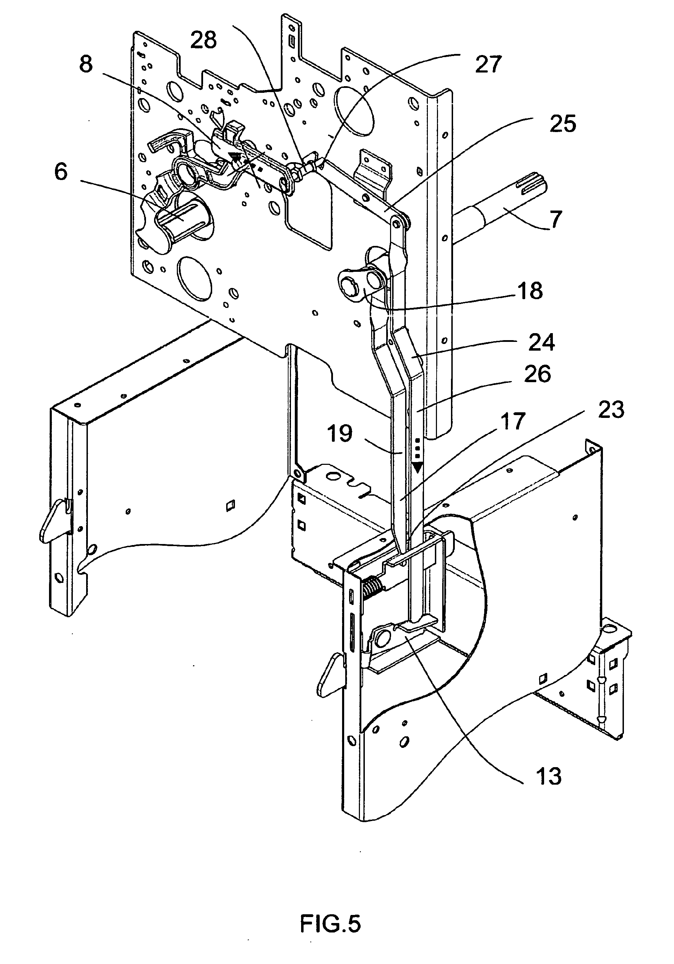

- La figure 5 représente le dispositif précité, l'interrupteur de la cellule étant ouvert, le dispositif de mise à la terre étant à la terre et la porte ouverte,

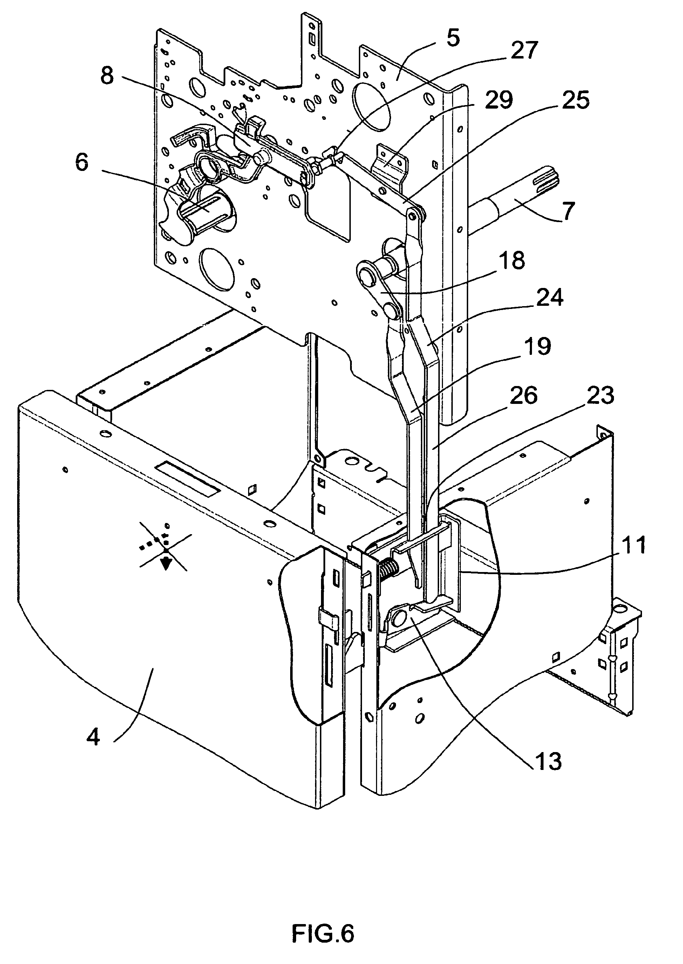

- La figure 6 représente le dispositif précité, l'interrupteur de la cellule étant ouvert, le dispositif de mise à la terre étant en ligne et la porte ouverte,

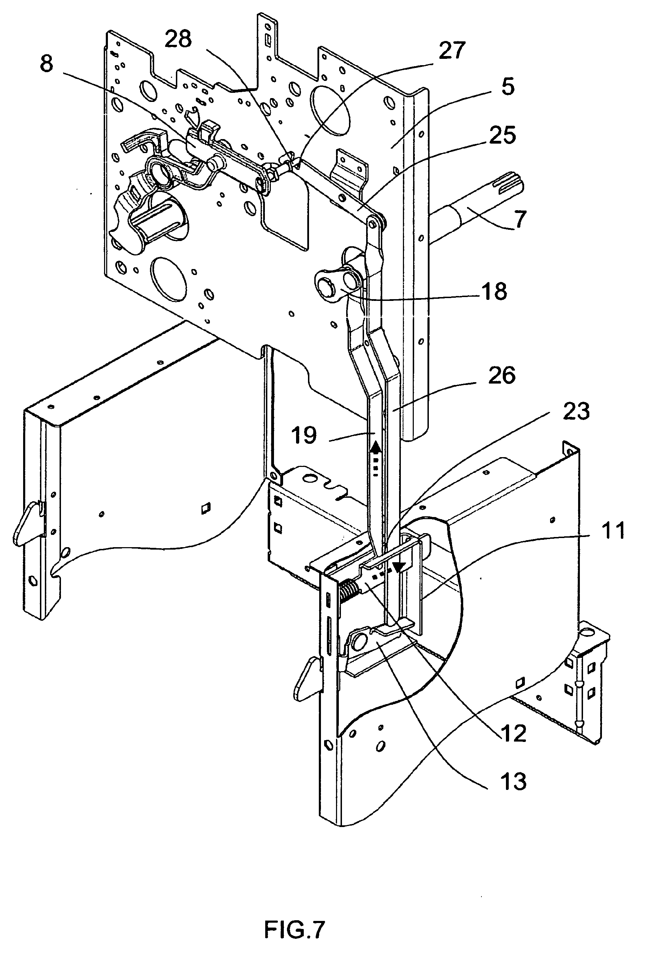

- La figure 7 représente le dispositif précité, l'interrupteur de la cellule étant ouvert, le dispositif de mise à la terre étant à la terre et la porte ouverte,

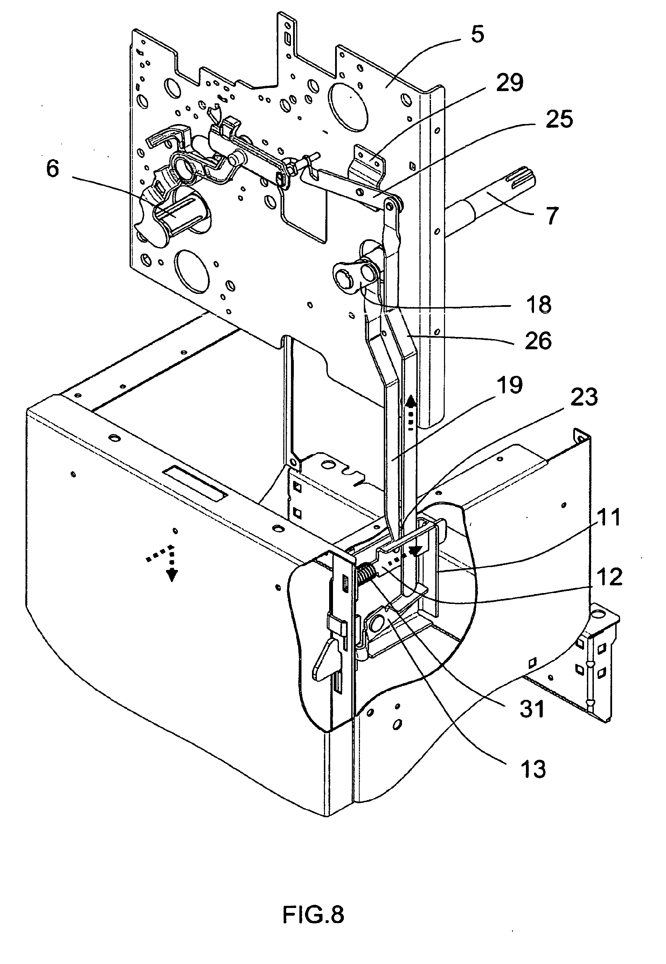

- La figure 8 représente le dispositif précité, l'interrupteur de la cellule étant ouvert, le dispositif de mise à la terre étant mis à la terre et la porte fermée,

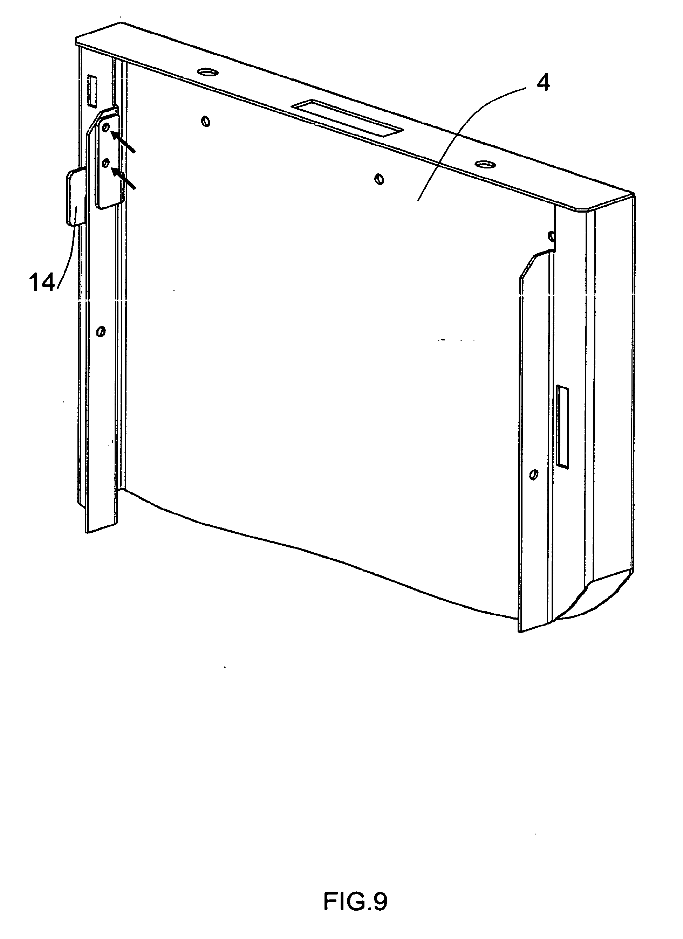

- La figure 9 est une vue partielle en perspective, illustrant la fixation d'un doigt indicateur de présence de la porte, sur la porte,

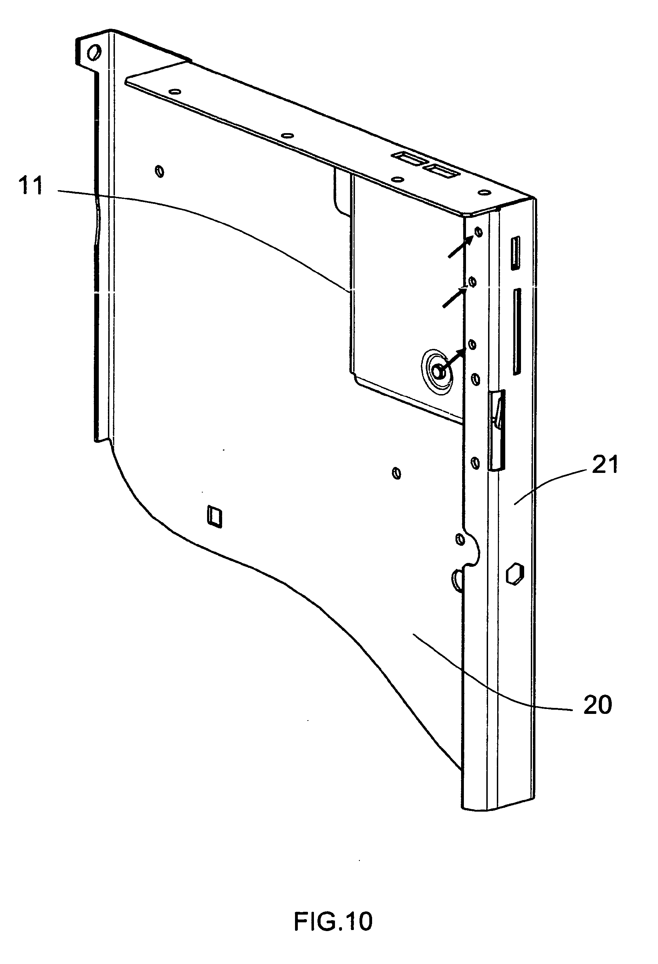

- La figure 10 est une vue partielle en perspective illustrant la fixation d'un boîtier comportant le verrou sur la porte,

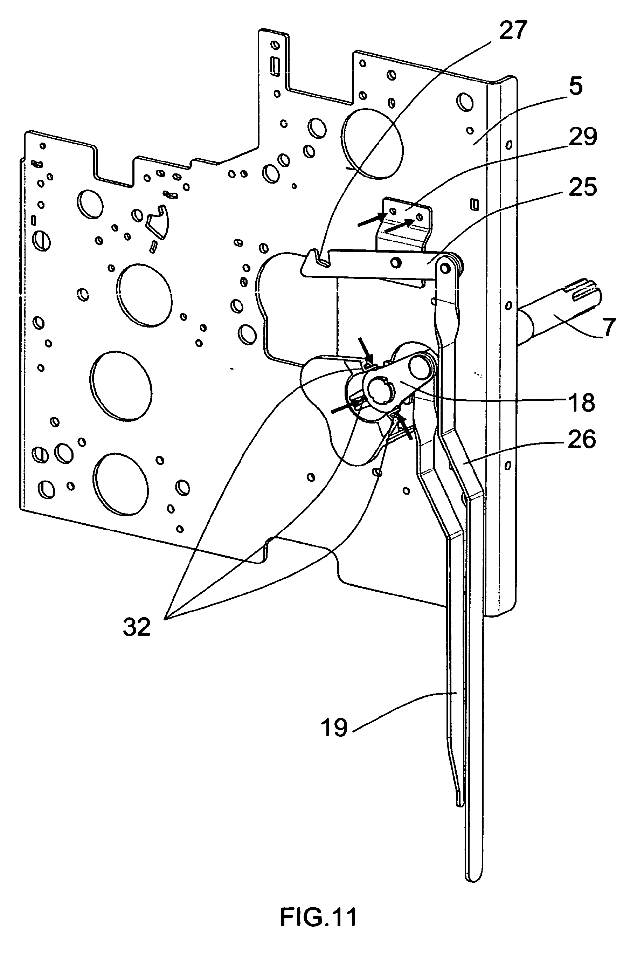

- La figure 11 est une vue partielle en perspective, illustrant la fixation de la tringle de verrouillage du sélecteur et de la tringle de verrouillage de la porte sur un support de la cellule, et

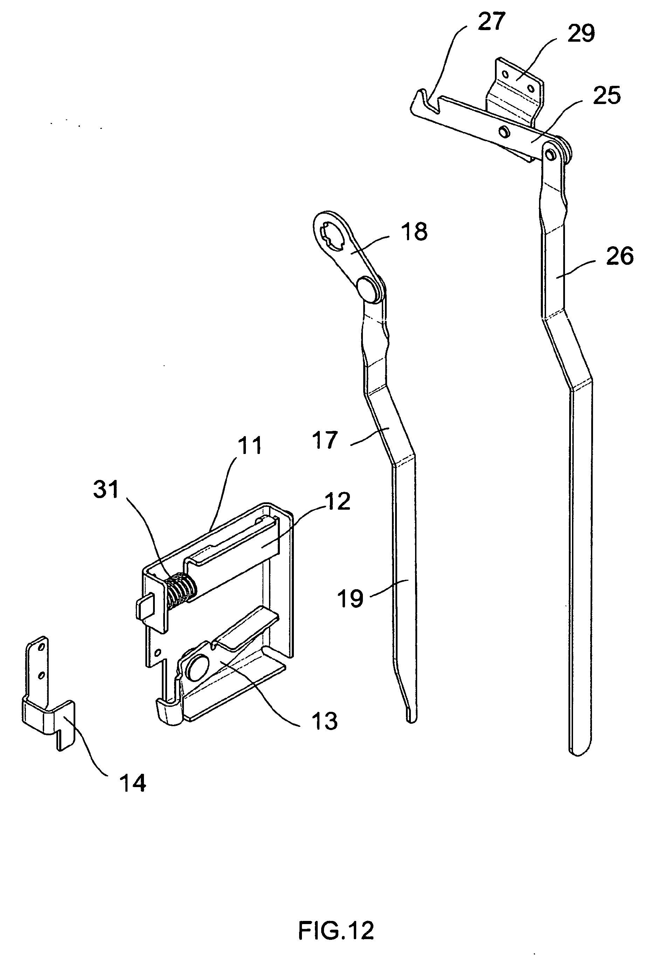

- La figure 12 est une vue illustrant en perspective, et séparément, le doigt indicateur de présence de la porte, le boîtier logeant le verrou, la tringle de verrouillage de la porte et la tringle de verrouillage du sélecteur.

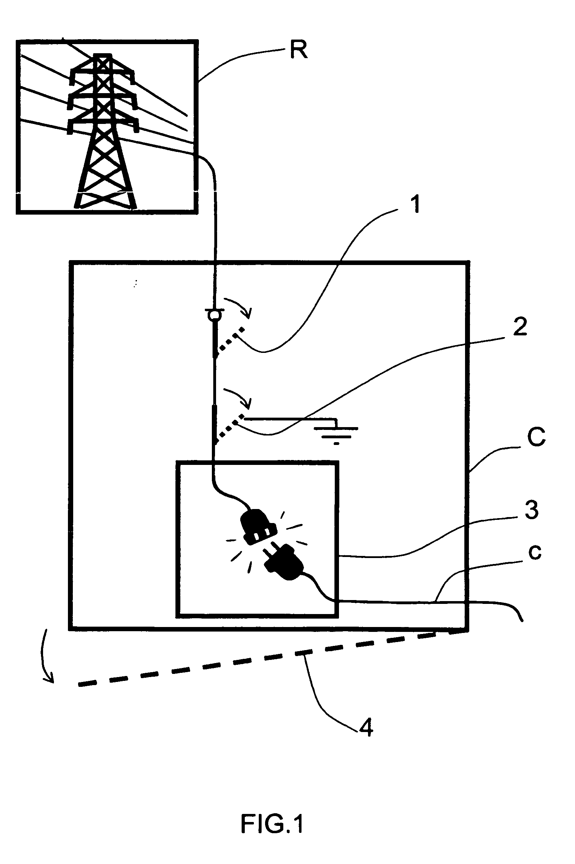

Sur la figure 1, on voit une cellule électrique moyenne tension C reliée électriquement en amont à un réseau électrique haute tension R et en aval à des câbles c, ladite cellule comportant un appareil de coupure électrique tel un interrupteur ou un disjoncteur 1 monté en série avec un dispositif de mise à la terre 2, ledit appareil de coupure étant relié en amont au réseau haute tension et en aval au dispositif de mise à la terre, ledit dispositif de mise à la terre étant relié en aval à ladite boîte à câbles 3, ladite porte 4 étant accessible au moyen d'une porte.

Sur les figures 2 à 8, la cellule comporte de manière connue en soi, un support 5, dit premier, par rapport auquel sont montés à rotation un arbre des pôles 6 par lequel les contacts de l'appareil de coupure peuvent être fermés ou ouverts, et un arbre 7 appartenant au dispositif de mise à la terre, ledit arbre pouvant être manoeuvré par un opérateur entre deux positions permettant respectivement la mise à la terre des câbles ou bien leur mise en ligne.

La cellule comporte également un sélecteur 8 relié mécaniquement à l'arbre de commande ou arbre des pôles, ledit sélecteur pouvant être manoeuvré de manière à pouvoir prendre deux positions, respectivement une première position dans laquelle le sélecteur 8 permet la manoeuvre de l'arbre de commande 6, et une seconde position dans laquelle le sélecteur empêche la manoeuvre de cet arbre.

De manière également connue en soi, la cellule C comporte un dispositif d'inter verrouillage comportant des moyens pour interdire l'accès à la boîte à câbles tant que la mise à la terre des câbles n'est pas assurée, des moyens pour interdire la fermeture de l'appareil de coupure tant que la porte de la boîte à câbles n'est pas présente et verrouillée, des moyens pour autoriser la remise en ligne du dispositif de mise à la terre, porte ouverte, mais interdire la fermeture de l'interrupteur ou du disjoncteur, lorsque cette porte est ouverte.

Selon l'invention, le dispositif d'interverrouillage selon l'invention comporte trois ensembles.

Le premier ensemble comporte un dispositif de verrouillage 9 du sélecteur 8 de la commande destiné à être piloté par la porte 4, le second ensemble un dispositif de verrouillage 10 de la porte destiné à être pilotée par l'arbre secondaire 7 du dispositif de mise à la terre et le troisième ensemble comporte un boîtier 11 logeant un verrou 12 et un levier de renvoi 13, ledit levier de renvoi 13 étant destiné à coopérer avec un doigt 14 prévu sur la porte 4 et destiné à indiquer la présence ou l'absence de la porte. Le doigt indicateur de présence de la porte, le boîtier et les deux dispositifs de verrouillage étant représentés successivement de gauche à droite sur la figure 12.

Comme ceci est également visible sur ces figures 2 à 8, la porte 4 de la boîte à câbles 3 est fixée sur la boîte à câbles par des moyens de fixation comportant des moyens d'accrochage 15 solidaires de la boîte à câbles, lesdits moyens d'accrochage coopérant avec une lumière 16 prévue dans la porte de manière à permettre le coulissement de la porte entre une première position dans laquelle ladite porte se trouve en regard en partie de l'appareil de coupure et en regard de la boîte à câbles et une position dans laquelle la porte se trouve totalement en regard de la boîte à câbles et coopère avec les moyens d'accrochage précités 15. La fixation de la porte est donc ainsi réalisée en plaquant tout d'abord la porte 4 contre la boîte à câbles 3 et en la faisant descendre jusqu'à ce qu'elle coopère avec les moyens d'accrochage précités 15, position dans laquelle ladite porte peut être verrouillée, comme ceci pourra être expliqué dans ce qui suit.

Le dispositif de verrouillage de la porte 10 comporte une tringle, ladite tringle comportant une première bielle 18 comportant une première extrémité 18a solidaire en rotation de l'arbre de mise à la terre 7 et une seconde extrémité 18b reliée de manière articulée à l'une 19a des extrémités d'une bielle plate 19 dite seconde torsadée à 90° dont l'autre extrémité 19b est destinée à coopérer avec un verrou 12, ladite bielle 19 étant torsadée de manière que cette bielle comporte deux parties 19c,19d s'étendant suivant deux plans formant entre eux un angle de sensiblement 90°, le premier plan s'étendant sensiblement perpendiculairement à l'arbre d'ouverture/fermeture 6 de l'appareil de coupure, à l'arbre de mise à la terre 7 et sensiblement parallèlement à la paroi de fond 20 de la boîte à câbles et le second plan s'étendant sensiblement parallèlement à la profondeur de la boîte à câbles et donc à ses parois latérales 21. L'extrémité libre de la bielle torsadée 19 comporte une partie biseautée 19c apte à coopérer avec une ouverture 23 prévue dans le verrou 12 comme ceci-sera expliqué dans ce qui suit.

La tringle 24 de verrouillage du sélecteur 8 comporte une bielle dite troisième 25 articulée par rapport audit support 5 de l'appareil de coupure 1 et comportant une première extrémité 25a coopérant avec le sélecteur 8, et une seconde extrémité 25b montée articulée par rapport à l'une 26a des extrémités d'une bielle dite quatrième 26 torsadée à 90°, de manière que cette bielle comporte deux parties 26c,26d s'étendant suivant deux plans formant entre eux un angle de sensiblement 90°, le premier plan s'étendant sensiblement perpendiculairement à l'arbre d'ouverture/fermeture 6 de l'appareil de coupure, à l'arbre de mise à la terre 7 et sensiblement parallèlement à la paroi de fond 20 de la boîte à câble et le second plan s'étendant sensiblement parallèlement à la profondeur de la boîte à câble et donc à ses parois latérales 21.

La première extrémité 25a de la bielle dite troisième 25 comporte une encoche 27 coopérant avec une tige 28 appartenant au sélecteur 8 et s'étendant sensiblement parallèlement aux arbres d'ouverture 6 et à l'arbre de mise à la terre 7, le sélecteur étant monté en rotation par rapport au support dit premier précité 5 entre les deux positions précitées.

L'extrémité libre de la bielle dite quatrième 26 coopère avec le levier de renvoi précité 13 monté dans le boîtier 11 comme ceci sera expliqué dans ce qui suit.

Comme ceci est particulièrement visible sur la figure 11, la bielle dite troisième 25 de la tringle de verrouillage de la porte 17, est montée articulée sur un support dit second 29 riveté sur le support dit premier précité 5 de l'appareil de coupure 1, tandis que la première bielle 18 de la tringle 17 de verrouillage de la porte est fixée sur l'arbre 7 de mise à la terre par des moyens de clipsage 32.

Le dispositif d'inter verrouillage selon l'invention comporte également le boîtier précité 11 destiné à être fixé sur la face intérieure d'une paroi latérale 21 de la boîte à câbles, tel qu'illustré sur la figure 10. Ledit boîtier loge un verrou 12, et un levier de renvoi 13. Ce verrou 12 comporte une pièce allongée 30 montée coulissante par ses deux extrémités opposées, à travers respectivement deux parties pliées en équerre 11a, 11b du boîtier 11, ladite pièce allongée comportant une première partie 30c autour de laquelle est monté un ressort 31, et une seconde partie 30d coopérant avec la tringle 17 de verrouillage de la porte, ledit ressort 31 étant interposé entre l'une 11 a des parties pliées en équerre et la seconde partie précitée 30d de la pièce allongée 30, le ressort 31 rappelant le verrou 12 dans une position escamotée.

Cette seconde partie 30d comporte une ouverture 23 destinée à coopérer avec une partie en biais 19e formée à l'extrémité libre de la bielle dite seconde 19 de la tringle de verrouillage de la porte 17, cette tringle se déplaçant à travers l'ouverture précitée à l'encontre de la force de rappel du ressort suivant une direction sensiblement perpendiculaire à la direction de déplacement du verrou, le ressort rappelant le verrou dans une position escamotée lorsque la tringle s'éloigne de l'ouverture.

A travers cette ouverture 23 est également montée la tringle 24 de verrouillage du sélecteur dont l'extrémité libre de la quatrième bielle 26 coopère avec le levier de renvoi 13.

Le levier de renvoi 13 est monté articulé par rapport au boîtier 11 et comporte une première extrémité destinée à coopérer avec une partie formant un doigt 14 fixée sur la porte, tel qu'illustré sur la figure 9, et une seconde extrémité coopérant avec la tringle de verrouillage du sélecteur 24.

Le fonctionnement du dispositif d'inter verrouillage selon l'invention va être décrit dans ce qui suit en référence aux figures.

Sur la figure 2, l'arbre 6 des pôles est en position fermée, la position du sélecteur 8 vers le côté gauche de l'appareil de coupure par rapport à la figure 2 ayant permis cette manoeuvre, et le dispositif de mise à la terre 2 est en ligne. La tige 28 du sélecteur est dégagée de l'encoche 27 de la tringle de verrouillage de la porte 17. La porte 4 est en position fermée et verrouillée, le verrouillage étant réalisé par introduction du verrou 12 dans une ouverture 33 de la porte 4, à l'encontre du ressort 31 lequel étant en appui par l'une 31 a de ses extrémités sur la porte et par son extrémité opposée 31 b sur le verrou, ce déplacement du verrou ayant été entraîné par déplacement de la tringle 17 de verrouillage de la porte à travers l'ouverture 23, par coopération de la forme en biais 19e de la tringle avec l'ouverture précitée. Dans cette position, le doigt de présence 14 de la porte rappelle le levier de renvoi 13 vers le haut, ce qui a pour effet d'entraîner la bielle dite troisième 25 dans un mouvement de rotation anti-horaire. Dans cette position, l'accès à la boîte à câbles est empêché tant que la mise à la terre des câbles n'est pas assurée.

Sur la figure 3, l'interrupteur est ouvert. L'arbre des pôles 6 est en position ouverte, ce qui a entraîné le sélecteur 8 vers la position terre.

Sur la figure 4, l'interrupteur est ouvert et l'arbre secondaire 7 de mise à la terre est en position de mise à la terre. Ceci a entraîné le déplacement vers le haut de la seconde bielle 19, d'où son dégagement de l'ouverture précitée 23. Il en résulte que le ressort 31 rappelle le verrou 12 dans une position escamotée permettant l'ouverture de la porte 4.

Sur la figure 5, la porte est ouverte, ce qui a eu pour effet de libérer le levier de renvoi 13 du doigt indicateur de présence, ce qui permet à la tringle 24 de verrouillage du sélecteur de descendre à travers l'ouverture 23 du verrou, sous l'effet de la gravité terrestre. Ce mouvement de la tringle 24 entraîne le déplacement en rotation dans le sens horaire de la troisième bielle 25 et l'engagement de l'encoche 27 avec la tige 28 du sélecteur 8, empêchant de ce fait la manoeuvre du sélecteur 8. Cette position du sélecteur n'empêche pas la remise en ligne de l'arbre de mise à la terre 7, tel que ceci est réalisé sur la figure 6, lors par exemple des tests d'injection de câbles. Cette remise en ligne a pour effet de déplacer la seconde bielle 19 vers le bas à travers l'ouverture 23, ce qui a pour effet de faire sortir le verrou 12 du boîtier 11. Il en résulte qu'il devient impossible de remettre la porte en place. La remise en place de la porte 4 nécessite la remise à la terre du dispositif de mise à la terre, de manière à rappeler le verrou 12 dans une position escamotée, tel qu'illustrée sur la figure 7. Cette position autorise la remise en ligne du dispositif de mise à la terre, mais n'autorise pas la fermeture de l'interrupteur ou du disjoncteur 1. La remise en place de la porte entraîne alors la rotation du levier de renvoi 13, ce qui a pour effet d'entraîner le déplacement vers le haut de la quatrième bielle 26 et la libération de la tige 28 de l'encoche 27 tel que ceci est illustré sur la figure 8. Cette libération ne permet pas encore la manoeuvre de l'arbre des pôles, et notamment la fermeture de l'appareil de coupure, car les câbles c nécessitent d'abord d'être remis en ligne.

On a donc réalisé selon l'invention un dispositif d'inter verrouillage permettant d'offrir une sécurité totale à l'opérateur sans pénaliser l'ergonomie.

Ainsi, le dispositif selon l'invention est robuste, compact, facilement intégrable dans la boîte à câbles depuis la face avant, dans n'importe quelle phase de vie, ne nécessitant aucun réglage, et comportant un minimum de pièces.

On s'affranchit des contraintes d'encombrement par un concept de verrou compact combiné à un jeu de tringles compactes également.

Cette compacité est obtenue par des bielles plates torsadées à 90° qui permettent d'optimiser leur encombrement par un changement de plan (dans la profondeur au niveau de la commande et dans la largeur au niveau de la boîte à câbles).

Ce verrou extra-plat peut se loger dans l'épaisseur du flanc de la boîte à câbles. Ce faible encombrement permet de ne pas gêner les utilisateurs lors de son intervention dans la boîte à câbles pour le montage des prises, les opérations de maintenance, le test des câbles...L'encombrement réduit permet également de ne générer aucune contrainte diélectrique. Le fait d'équiper une boîte à câbles d'un dispositif d'interverrouillage ne pénalise pas ses performances diélectriques.

De plus, ce sous-ensemble est entièrement accessible depuis la face avant. Il est ainsi très facile d'équiper une cellule. Ceci est particulièrement intéressant dans le cas d'enveloppes juxtaposées (montage en cellule). Cela permet une intervention directement par la face avant de la partie concernée sans démontage d'éléments adjacents.

Le montage des différents éléments s'effectue de manière simple et rapide uniquement par rivetage et clipsage sans aucune vis, cette opération ne nécessitant aucun réglage de la part de l'opérateur.

En outre, le système est dit à sécurité positive. A l'état de repos, l'inter verrouillage est en position « porte absente » dans laquelle il est impossible de manoeuvrer l'interrupteur ou le disjoncteur. Cet état est obtenu naturellement par gravité terrestre. De même, le ressort sert uniquement au rappel du verrou donc à la libération de la porte. En cas de défaillance du ressort, la porte reste donc en position verrouillée. D'autre part, le verrouillage du sélecteur est dit engageant, plus on force sur le sélecteur plus le système se verrouille.

L'ensemble de l'inter verrouillage est réalisé à partir de l'assemblage de simples pièces de tôlerie.

Ces pièces sont toutes obtenues en pliage « traditionnel » et ne nécessitent pas de process spécifique ni de tolérance précises.

Le verrou est réalisé par seulement deux pièces de tôlerie maintenues par un ressort. Celles-ci s'assemblent de manière extrêmement simple et rapide sans aucun outillage.

Une fois l'ensemble du verrou monté sur la cellule, il n'y a aucun accès possible. On empêche ainsi tout risque de détérioration.

Tout ceci contribue à une mise en oeuvre simple, rapide, et sans outil particulier pour un coût relativement faible.

L'invention s'applique à tout compartiment d'une cellule électrique comportant un arbre de commande et un arbre de mise à la terre, et présentant un accès contrôlé via une porte, aux parties sous tension.

## Revendications

1. Dispositif d'inter verrouillage destiné à sécuriser l'accès à la boîte à câbles d'une cellule électrique (c), tadite cellule comprenant au moins un appareil de coupure électrique (1) en série avec des moyens (2) de mise à la terre des câbles, ladite cellule étant reliée en amont à un réseau d'alimentation électrique (R) et en aval à au moins un câbles (c), le ou les câbles étant logé(s) dans une boîte à câbles (3) comportant une paroi de fond (20), une paroi inférieure, une paroi supérieure séparant la boîte à câbles du compartiment logeant l'appareil de coupure et les moyens de mise à la terre, deux parois latérales (21) et une porte (4), ledit dispositif comportant des moyens pour autoriser l'ouverture de la porte précitée uniquement si la mise à la terre des câbles est réalisée, des moyens pour interdire la fermeture de l'appareil de coupure tant que la porte n'est pas présente et verrouillée, et des moyens pour autoriser la remise en ligne des moyens de mise à la terre lorsque la porte est ouverte mais interdire la fermeture de l'appareil de coupure lorsque ladite porte est ouverte, ladite cellule comportant un sélecteur (8) relié mécaniquement à l'appareil de coupure et au dispositif de mise à la terre, ledit sélecteur étant actionnable par un opérateur et mobile entre deux positions respectivement une position autorisant la manoeuvre de l'arbre d'ouverture et de fermeture de l'appareil de coupure et une position n'autorisant pas cette manoeuvre,
**caractérisé en ce qu'**il comporte un boîtier (11) logeant un verrou (12) et un levier de renvoi (13), ledit boîtier (11) étant destiné à être fixé sur la face intérieure d'une paroi (21) de la boîte à câbles (3), ledit verrou (12) coopérant d'une part avec la porte (4) et d'autre part, avec une tringle (17) de verrouillage de la porte commandée par l'arbre (7) du dispositif de mise à la terre (2), de manière que la commande de la mise à la terre des câbles (c) entraîne le déverrouillage de la porte (4), ledit levier de renvoi (13) coopérant d'une part avec la porte (4) et d'autre part, avec une tringle de verrouillage du sélecteur (24), de manière à empêcher le déplacement du sélecteur (8) vers une position autorisant l'ouverture ou la fermeture de l'appareil de coupure (1), lorsque la porte n'est pas en position fermée.

2. Dispositif d'inter verrouillage selon la revendication 1, **caractérisé en ce que** le verrou (12) comporte une pièce allongée (30) montée coulissante, à travers respectivement deux parties pliées en équerre (11a, 11b) du boîtier (11), ladite pièce allongée (30) comportant une première partie (30c) autour de laquelle est monté un ressort (31), et une seconde partie (30d) coopérant avec la tringle (10) de verrouillage de la porte, ledit ressort (31) étant interposé entre l'une (11a) des parties pliées en équerre et la seconde partie précitée (30d) de la pièce allongée (30), le ressort (31) rappelant le verrou (12) dans une position escamotée.

3. Dispositif d'inter verrouillage selon la revendication 2, **caractérisé en ce que** cette seconde partie (30d) comporte une ouverture (23) destinée à coopérer avec une partie en biais (19e) formée à l'extrémité libre de la bielle dite seconde (19) de la tringle (17) de verrouillage de la porte, cette tringle se déplaçant à travers l'ouverture précitée (23) à l'encontre de la force de rappel du ressort (31) suivant une direction sensiblement perpendiculaire à la direction de déplacement du verrou (12), le ressort rappelant le verrou dans une position escamotée lorsque la tringle (17) s'éloigne de l'ouverture.

4. Dispositif d'inter verrouillage selon l'une quelconque des revendications 1 à 3, **caractérisé en ce que** ce levier de renvoi (13) est monté articulé par rapport au boîtier (11) et comporte une première extrémité (13a) destinée à coopérer avec un doigt (14) prévu sur la porte et une seconde extrémité (13b) coopérant avec la tringle (24) de verrouillage du sélecteur.

5. Dispositif d'inter verrouillage selon la revendication 3 ou 4, **caractérisé en ce que** les deux tringles précitées (17,24) traversent l'ouverture précitée (23).

6. Dispositif d'inter verrouillage selon l'une quelconque des revendications 1 à 5, **caractérisé en ce qu'**il comporte des moyens de fixation de la porte (4) sur la boîte à câbles (3), lesdits moyens comportant des moyens d'accrochage (15) solidaires de la boîte à câbles (3) ou de la porte (4), lesdits moyens d'accrochage (15) coopérant avec au moins une lumière (16) appartenant à la porte respectivement, la boîte à câbles, de manière à permettre le coulissement de la porte par rapport à la boîte à câbles d'une position dans laquelle ladite porte se trouve en regard en partie de l'appareil de coupure (1) et de la boîte à câbles (3) à une position dans laquelle ladite porte se trouve totalement en regard de la boîte à câbles, position permettant le verrouillage de ladite porte, la fixation de la porte étant réalisée en plaquant tout d'abord la porte contre la boîte à câbles (3) et en la faisant descendre jusqu'à ce qu'elle coopère avec les moyens d'accrochage précités (15), position dans laquelle ladite porte (4) peut être verrouillée.

7. Dispositif d'inter verrouillage selon l'une quelconque des revendications précédentes, **caractérisé en ce que** la tringle (17) de verrouillage de la porte précitée comporte une première bielle (18) comportant une première extrémité (18a) solidaire en rotation de l'arbre de mise à la terre (7) et une seconde extrémité (18b) reliée de manière articulée à l'une (19a) des extrémités d'une bielle plate dite seconde (19) torsadée à 90° dont l'autre extrémité (19b) coopère avec un verrou (12), ladite bielle (19) étant torsadée de manière que cette bielle comporte deux parties (19c,19d) s'étendant suivant deux plans formant entre eux un angle de sensiblement 90°, le premier plan s'étendant sensiblement perpendiculairement à l'arbre d'ouverture/fermeture de l'appareil de coupure (1), à l'arbre (7) de mise à la terre et sensiblement parallèlement à la paroi de fond (20) de la boîte à câble et le second plan s'étendant sensiblement parallèlement à la profondeur de la boîte à câble (3) et donc à ses parois latérales (21).

8. Dispositif d'inter verrouillage selon l'une quelconque des revendications précédentes, **caractérisé en ce que** la tringle (24) de verrouillage du sélecteur (8) comporte une bielle dite troisième (25) articulée par rapport à un support dit premier (5) de l'appareil de coupure et comportant une première extrémité (25a) coopérant avec le sélecteur (8), et une seconde extrémité (25b) montée articulée par rapport à l'une (26a) des extrémités d'une bielle dite quatrième (26) torsadée à 90°, de manière que cette bielle comporte deux parties (26c,26d) s'étendant suivant deux plans formant entre eux un angle de sensiblement 90°, le premier plan s'étendant sensiblement perpendiculairement à l'arbre d'ouverture/fermeture de l'appareil de coupure, à l'arbre de mise à la terre (7) et sensiblement parallèlement à la paroi de fond (20) de la boîte à câble et le second plan s'étendant sensiblement parallèlement à la profondeur de la boîte à câble et donc à ses parois latérales (21).

9. Dispositif d'inter verrouillage selon la revendication 8, **caractérisé en ce que** la première extrémité (25a) de la bielle dite troisième (25), comporte une encoche (27) coopérant avec une tige (28) appartenant au sélecteur (8) et s'étendant sensiblement parallèlement à l'arbre d'ouverture et de fermeture (6) et à l'arbre de mise à la terre (7).

10. Dispositif d'inter verrouillage selon la revendication 9, **caractérisé en ce qu'**en position dite « porte absente », la tringle (24) de verrouillage du sélecteur est amenée par gravité terrestre dans une position de verrouillage du sélecteur dans laquelle elle coopère avec la tige précitée (28).

11. Dispositif d'inter verrouillage selon l'une quelconque des revendications 8 à 10, **caractérisé en ce que** la bielle dite troisième (25) est montée articulée sur un support dit second (29), ledit second support (29) étant riveté sur le support dit premier précité (5) de l'appareil de coupure (1).

12. Dispositif d'inter verrouillage selon l'une quelconque des revendications précédentes, **caractérisé en ce que** la première bielle (18) de la tringle (17) de verrouillage de la porte est fixée sur l'arbre de mise à la terre (7) par clipsage (32).

13. Dispositif d'inter verrouillage selon l'une quelconque des revendications précédentes, **caractérisé en ce que** toutes les pièces du dispositif de verrouillage à savoir le boîtier (11), le verrou (12), le levier de renvoi (13), le doigt de présence (14) de la porte, la tringle (17) de verrouillage de la porte et la tringle (24) de verrouillage du sélecteur (8) sont réalisées à partir de simples pièces de tôlerie.

14. Cellule électrique moyenne tension comportant un dispositif d'interverrouillage selon l'une quelconque des revendications précédentes.

## Patentansprüche

1. Vorrichtung zur gegenseitigen Verriegelung zum Zweck der Zugangssicherung des Kabelraums einer Schaltzelle (C), welche Schaltzelle mindestens ein mit Erdungsmitteln (2) zur Erdung der Kabel in Reihe geschaltetes elektrisches Schaltgerät (1) umfasst und einspeiseseitig an ein elektrisches Stromversorgungsnetz (R) sowie abgangsseitig an mindestens ein Kabel (c) angeschlossen ist, welches/ welche Kabel in einem Kabelraum (3) mit einer Rückwand (20), einer Bodenwand, einer Deckenwand, die den Kabelraum von dem das Schaltgerät und die Erdungsmittel enthaltenden Geräteraum trennt, zwei Seitenwänden (21) und einer Tür (4) angeordnet ist/sind, wobei die genannte Vorrichtung Mittel, die eine Öffnung der genannten Tür nur nach vorausgegangener Erdung der Kabel erlauben, Mittel, die eine Einschaltung des Schaltgeräts bei fehlender oder nicht verriegelter Tür verhindern, sowie Mittel umfasst, die eine Wiederaufschaltung der Erdungsmittel bei geöffneter Tür erlauben, das Einschalten des Schaltgeräts bei geöffneter Tür jedoch verhindern, und die Schaltzelle eine mechanisch mit dem Schaltgerät und den Erdungsmitteln verbundene Einstellvorrichtung (8) umfasst, die durch einen Bediener betätigt und zwischen zwei Stellungen verschoben werden kann, nämlich einer Stellung, in der die Ein-/Ausschaltwelle des Schaltgeräts betätigt werden kann, und einer Stellung, in der diese Betätigung nicht möglich ist, **dadurch gekennzeichnet, dass** die Vorrichtung ein Gehäuse (11) umfasst, in dem ein Riegel (12) und ein Rückstellhebel (13) angeordnet sind, welches Gehäuse (11) dazu dient, an der Innenseite einer Wand (21) des Kabelraums (3) befestigt zu werden, wobei der genannte Riegel (12) einerseits mit der Tür (4) und andererseits mit einem, über die Betätigungswelle (7) der Erdungsmittel (2) gesteuertes Türverriegelungsgestänge (17) zusammenwirkt, derart, dass die Betätigung der Mittel zur Erdung der Kabel (c) die Entriegelung der Tür (4) bewirkt, und der genannte Rückstellhebel (13) einerseits mit der Tür (4) und andererseits mit einem Gestänge (24) zur Verriegelung der Einstellvorrichtung zusammenwirkt, derart dass bei nicht geschlossener Tür eine Verschiebung der Einstellvorrichtung (8) in eine Stellung verhindert wird, die das Ausschalten oder Einschalten des Schaltgeräts (1) ermöglicht.

2. Vorrichtung zur gegenseitigen Verriegelung nach Anspruch 1, **dadurch gekennzeichnet, dass** der Riegel (12) ein, in zwei rechtwinklig umbogenen Wandabschnitten (11a, 11 b) des Gehäuses (11) gleitend gelagertes längliches Teil (30) umfasst, welches längliche Teil (30) einen ersten Abschnitt (30c), um den eine Feder (31) geführt ist, sowie einen zweiten Abschnitt (30d) umfasst, der mit der Türverriegelungsstange (10) zusammenwirkt, wobei die genannte Feder (31) zwischen einen (11a) der rechtwinklig umbogenen Wandabschnitte und dem genannten zweiten Abschnitt (30d) des länglichen Teils (30) angeordnet ist und den Riegel (12) in Richtung einer Rückzugstellung beaufschlagt

3. Vorrichtung zur gegenseitigen Verriegelung nach Anspruch 2, **dadurch gekennzeichnet, dass** der genannte zweite Abschnitt (30d) eine Öffnung (23) umfasst, die dazu dient, mit einem am freien Ende des sogenannten zweiten Hebels (19) des Türverrriegelungsgestänges (17) ausgebildeten, abgeschrägten Abschnitt (19e) zusammenzuwirken, wobei das genannte Gestänge gegen die Wirkung der Feder (31) in einer annähernd rechtwinklig zur Verschiebungsrichtung des Riegels (12) verlaufenden Richtung durch die genannte Öffnung (23) hindurch verschoben wird und die Feder den Riegel in Richtung einer Rückzugstellung beaufschlagt, wenn sich das Gestänge (17) aus der Öffnung zurückzieht.

4. Vorrichtung zur gegenseitigen Verriegelung nach irgendeinem der Ansprüche 1 bis 3, **dadurch gekennzeichnet, dass** der Rückstellhebel (13) gelenkig am Gehäuse (11) befestigt ist und ein erstes Ende (13a), das dazu dient, mit einem an der Tür befestigten Bügel (14) zusammenzuwirken, sowie ein zweites Ende (13b) umfasst, das mit dem Gestänge (24) zur Verrieglung der Einstellvorrichtung zusammenwirkt.

5. Vorrichtung zur gegenseitigen Verriegelung nach Anspruch 3 oder 4, **dadurch gekennzeichnet, dass** die beiden genannten Gestänge (17, 24) die genannte Öffnung (23) durchragen.

6. Vorrichtung zur gegenseitigen Verriegelung nach irgendeinem der Ansprüche 1 bis 5, **dadurch gekennzeichnet, dass** sie Befestigungsmittel zur Befestigung der Tür (4) auf dem Kabelraum (3) umfasst, welche Befestigungsmittel mit dem Kabelraum (3) oder der Tür (4) verbundene Rastmittel (15) umfassen, die ihrerseits mit mindestens einer am Kabelraum oder an der Tür ausgebildeten Aussparung (16) zusammenwirken, derart dass ein Verschieben der Tür in Bezug zum Kabelraum von einer Stellung, in der sich die Tür teilweise gegenüber dem Schaltgeräteraum (1) und teilweise gegenüber dem Kabelraum (3) befindet, in eine Stellung ermöglicht wird, in der die genannte Tür vollständig gegenüber dem Kabelraum angeordnet ist und so eine Verriegelung der Tür möglich ist, wobei die Befestigung der Tür so erfolgt, dass sie zunächst auf dem Kabelraum (3) positioniert und anschließend nach unten geschoben wird, bis sie mit den genannten Rastmitteln (15) zusammenwirkt und eine Stellung einnimmt, in der die genannte Tür (4) verriegelt werden kann.

7. Vorrichtung zur gegenseitigen Verriegelung nach irgendeinem der vorhergehenden Ansprüche, **dadurch gekennzeichnet, dass** das genannte Türverriegelungsgestänge (17) einen ersten Hebel (18) mit einem ersten Ende (18a), welches drehwirksam mit der Erdungswelle (7) verbunden ist, sowie ein zweites Ende (18b) umfasst, das an eines (19a) der Enden eines flachen um 90° in sich verdrehten, sogenannten zweiten Hebels (19) angelenkt ist, dessen anderes Ende (19b) mit einem Riegel (12) zusammenwirkt, wobei die Verdrehung des genannten Hebels (19) so ausgebildet ist, dass dieser zwei Abschnitte (19c,19d) aufweist, die in zwei annähernd rechtwinklig zueinander liegenden Ebenen angeordnet sind, und die erste Ebene annähernd senkrecht zur Ein-/Ausschaltwelle des Schaltgeräts (1) und zur Erdungswelle (7) sowie annähernd parallel zur Rückwand (20) des Kabelraums verläuft und die zweite Ebene annähernd parallel zur Tiefenachse des Kabelraums (3) und damit zu dessen Seitenwänden (21) verläuft.

8. Vorrichtung zur gegenseitigen Verriegelung nach irgendeinem der vorhergehenden Ansprüche, **dadurch gekennzeichnet, dass** das Gestänge (24) zur Verriegelung der Einstellvorrichtung (8) einen sogenannten dritten Hebel (25) umfasst, der an einen sogenannten ersten Träger (5) des Schaltgeräts angelenkt ist und ein mit der Einstellvorrichtung (8) zusammenwirkendes erstes Ende (25a) sowie ein zweites Ende (25b) umfasst, das an eines (26a) der Enden eines um 90° in sich verdrehten, sogenannten vierten Hebels (26) angelenkt ist, derart dass dieser Hebel zwei Abschnitte (26c,26d) aufweist, die in zwei annähernd rechtwinklig zueinander liegenden Ebenen angeordnet sind, wobei die erste Ebene annähernd senkrecht zur Ein-/ Ausschaltwelle des Schaltgeräts (1) und zur Erdungswelle (7) sowie annähernd parallel zur Rückwand (20) des Kabelraums verläuft und die zweite Ebene annähernd parallel zur Tiefenachse des Kabelraums (3) und damit zu dessen Seitenwänden (21) verläuft.

9. Vorrichtung zur gegenseitigen Verriegelung nach Anspruch 8, **dadurch gekennzeichnet, dass** das erste Ende (25a) des sogenannten dritten Hebels (25) eine Kerbe (27) umfasst, die mit einer Stange (28) der Einstellvorrichtung (8) zusammenwirkt und annähernd parallel zur Ein-/Ausschaltwelle (6) sowie zur Erdungswelle (7) verläuft.

10. Vorrichtung zur gegenseitigen Verriegelung nach Anspruch 9, **dadurch gekennzeichnet, dass** in der sogenannten "Keine Tür"-Stellung das Gestänge (24) zur Verriegelung der Einstellvorrichtung durch Schwerkraftwirkung in eine Verriegelungsstellung der Einstellvorrichtung verbracht wird, in der das Gestänge mit der genannten Stange (28) zusammenwirkt.

11. Vorrichtung zur gegenseitigen Verriegelung nach irgendeinem der Ansprüche 8 bis 10, **dadurch gekennzeichnet, dass** der sogenannte dritte Hebel (25) an einen sogenannten zweiten Träger (29) angelenkt ist, welcher zweite Träger (29) an den sogenannten ersten Träger (5) des Schaltgeräts (1) angenietet ist.

12. Vorrichtung zur gegenseitigen Verriegelung nach irgendeinem der vorhergehenden Ansprüche, **dadurch gekennzeichnet, dass** der erste Hebel (18) des Türverriegelungsgestänges (17) durch Schnappmittel (32) an der Erdungswelle (7) befestigt ist.

13. Vorrichtung zur gegenseitigen Verriegelung nach irgendeinem der vorhergehenden Ansprüche, **dadurch gekennzeichnet, dass** sämtliche Teile der Verriegelungsvorrichtung, d.h. das Gehäuse (11), der Riegel (12), der Rückstellhebel (13), der Türerkennungsbügel (14), das Türverriegelungsgestänge (17) und das Gestänge (24) zur Verriegelung der Einstellvorrichtung (8) aus einfachen Eisenblechen gefertigt sind.

14. Mittelspannungs-Schaltzelle mit einer Verriegelungsvorrichtung nach irgendeinem der vorhergehenden Ansprüche.

## Claims

1. An interlock device designed to secure access to the cable box of an electric cubicle (C), said cubicle comprising at least one electric switchgear apparatus (1) in series with earthing means (2) of the cables, said cubicle being connected line-side to an electric power supply system (R) and load-side to at least one cable (c), the cable or cables being housed in a cable box (3) comprising a rear panel (20), a bottom panel, a top panel separating the cable box from the compartment housing the switchgear apparatus and the earthing means, two side panels (21) and a door (4), said device comprising means for allowing opening of the above-mentioned door only if earthing of the cables is effective, means for preventing closing of the switchgear apparatus so long as the door is not present and locked, and means for allowing reconnection of the earthing means to the line when the door is open but for preventing closing of the switchgear apparatus when said door is open, said cubicle comprising a selector (8) mechanically connected to the switchgear apparatus and to the earthing means, said selector being able to be actuated by an operator and being movable between two positions respectively a position enabling operation of the opening and closing shaft of the switchgear apparatus and a position not enabling this operation, **characterized in that** it comprises a case (11) housing a lock (12) and a counter lever (13), said case (11) being designed to be fixed onto the inner surface of a panel (21) of the cable box (3), said lock (12) collaborating on the one hand with the door (4) and on the other hand with a rod system (17) for locking the door controlled by the shaft (7) of the earthing device (2), so that commanding earthing of the cables (c) results in the unlocking of the door (4), said counter lever (13) collaborating on the one hand with the door (4) and on the other hand with a rod system (24) for locking the selector so as to prevent movement of the selector (8) to a position allowing opening or closing of the switchgear apparatus (1) when the door is not in the closed position.

2. The interlock device according to claim 1, **characterized in that** the lock (12) comprises an elongate part (30) mounted sliding respectively through two parts folded into a bracket (11a, 11b) of the case (11), said elongate part (30) comprising a first part (30c) around which a spring (31) is fitted and a second part (30d) collaborating with the rod system (10) for locking the door, said spring (31) being fitted between one (11a) of the parts folded into a bracket and the above-mentioned second part (30d) of the elongate part (30), the spring (31) biasing the lock (12) to a retracted position.

3. The interlock device according to claim 2, **characterized in that** this second part (30d) comprises an opening (23) designed to collaborate with an angled part (19e) formed at the free end of the rod called second rod (19) of the rod system (17) for locking the door, this rod system moving through the above-mentioned opening (23) against the biasing force of the spring (31) in a direction substantially perpendicular to the direction of movement of the lock (12), the spring biasing the lock to a retracted position when the rod system (17) moves away from the opening.

4. The interlock device according to any one of claims 1 to 3, **characterized in that** the counter lever (13) is mounted articulated with respect to the case (11) and comprises a first end (13a) designed to collaborate with a finger (14) provided on the door and a second end (13b) collaborating with the rod system (24) for locking the selector.

5. The interlock device according to claim 3 or 4, **characterized in that** the above-mentioned two rod systems (17,24) pass through the above-mentioned opening (23).

6. The interlock device according to any one of claims 1 to 5, **characterized in that** it comprises means for fixing the door (4) onto the cable box (3), said means comprising securing means (15) integrally affixed to the cable box (3) or to the door (4), said securing means (15) collaborating with at least one aperture (16) belonging to the door, respectively to the cable box, so as to enable sliding of the door with respect to the cable box from a position in which said door is partly facing the switchgear apparatus (1) and the cable box (3) to a position in which said door is totally facing the cable box, a position enabling locking of said door, fixing of the door being performed by first pressing the door against the cable box (3) and then moving it downwards until it collaborates with the above-mentioned securing means (15), a position in which said door (4) can be locked.

7. The interlock device according to any one of the foregoing claims, **characterized in that** the above-mentioned rod system (17) for locking the door comprises a first rod (18) comprising a first end (18a) securedly affixed in rotation to the earthing shaft (7) and a second end (18b) connected in articulated manner to one (19a) of the ends of a flat rod called second rod (19) twisted through 90°, the other end (19b) of which rod operates in conjunction with a lock (12), said rod (19) being twisted in such a way that this rod comprises two parts (19c,19d) extending along two planes forming an angle of substantially 90° between them, the first plane extending substantially perpendicularly to the opening/closing shaft of the switchgear apparatus (1) and to the earthing shaft (7) and in substantially parallel manner to the rear wall (20) of the cable box, and the second plane extending in substantially parallel manner to the depth of the cable box (3) and therefore to its side panels (21).

8. The interlock device according to any one of the foregoing claims, **characterized in that** the rod system (24) for locking the selector (8) comprises a rod called third rod (25) articulated with respect to a support called first support (5) of the switchgear apparatus and comprising a first end (25a) collaborating with the selector (8) and a second end (25b) mounted articulated with respect to one (26a) of the ends of a rod called fourth rod (26) twisted through 90°, so that this rod comprises two parts (26c,26d) extending along two planes forming an angle of substantially 90° between them, the first plane extending substantially perpendicularly to the opening/closing shaft of the switchgear apparatus and to the earthing shaft (7) and in substantially parallel manner to the rear wall (20) of the cable box, and the second plane extending in substantially parallel manner to the depth of the cable box and therefore to its side panels (21).

9. The interlock device according to claim 8, **characterized in that** the first end (25a) of the rod called third rod (25) comprises a notch (27) collaborating with a shank (28) belonging to the selector (8) and extending in substantially parallel manner to the opening and closing shaft (6) and to the earthing shaft (7).

10. The interlock device according to claim 9, **characterized in that** in the position called "door absent", the rod system (24) for locking the selector is moved by the force of gravity to a locking position of the selector in which it collaborates with the above-mentioned shank (28).

11. The interlock device according to any one of claims 8 to 10, **characterized in that** the rod called third rod (25) is mounted articulated on a support called second support (29), said second support (29) being riveted onto the above-mentioned support called first support (5) of the switchgear apparatus (1).

12. The interlock device according to any one of the foregoing claims, **characterized in that** the first rod (18) of the rod system (17) for locking the door is fixed onto the earthing shaft (7) by clip-fastening (32).

13. The interlock device according to any one of the foregoing claims, **characterized in that** all the parts of the locking device, i.e. the case (11), lock (12), counter lever (13), door presence finger (14), rod system (17) for locking the door and rod system (24) for locking the selector (8), are made from simple sheet metal parts.

14. A medium-voltage electric cubicle comprising an interlock device according to any one of the foregoing claims.
